# EUROPÄISCHE PATENTANMELDUNG

(11) **EP 0 885 773 A1**
(43) Veröffentlichungstag der Anmeldung: **23.12.1998**
(21) Anmeldenummer: 98110749.3
(22) Anmeldetag: 12.06.1998
(51) Int. Cl.: B60P 3/00

(54) **Befestigung von Traggestellen an einer Kraftfahrzeug-Seite**

(30) Priorität: 18.06.1997 DE 29710588 U
(71) Anmelder: Lansing Fahrzeugbau GmbH, 48691 Vreden (DE)
(72) Erfinder: Lansing, Johannes Sen., 48691 Vreden (DE)
(74) Vertreter: Stenger, Watzke & Ring Patentanwälte

(57) **Zusammenfassung**

Um eine Vorrichtung für an einer Seite eines Kraftfahrzeuges (1) im wesentlichen vertikal anzuordnende Traggestelle (2) bereitzustellen, die eine einfache Montage und Demontage des Traggestells (2) am Kraftfahrzeug (1) gewährleistet, wird vorgeschlagen, eine Vorrichtung für an einer Seite des Kraftfahrzeuges im wesentlichen vertikal anzuordnende Traggestelle (2) mit jeweils einer Befestigungseinheit im Bereich einer Oberkante (9) und einer Unterkante (10) der Seite der Kraftfahrzeugkarosserie, wobei die wenigstens eine Befestigungseinheit an der Oberkante (9) des Kraftfahrzeuges (1) eine lösbare Schwenklagerverbindung umfaßt, und die wenigstens eine Befestigungseinheit an der Unterkante (10) der Kraftfahrzeugkarosserie wenigstens eine im wesentlichen starre, kraftaufnehmende Verbindungseinheit umfaßt.

## Beschreibung

Die Erfindung betrifft eine Vorrichtung für an einer Seite eines Kraftfahrzeuges im wesentlichen vertikal anzuordnender Traggestelle.

Im Stand der Technik ist es bekannt, für unterschiedlichste Transportzwecke an Kraftfahrzeugen Traggestelle anzuordnen. Insbesondere im Handwerk werden bevorzugt Kleinbusse, Kombis und dergleichen verwendet, die geschlossene Karosserien haben, da im Inneren des Kombi, des Kleinbusses und dergleichen Werkzeuge, Verbrauchsmaterialien, sogar Werkbänke und dergleichen untergebracht sind. Derartige mobile Werkstattfahrzeuge werden für Montage- und Reparaturzwecke eingesetzt. Dabei ist es häufig erforderlich, auch große Elemente zu transportieren. Es ist bekannt, Dachgepäckträger einzusetzen, insbesondere für lange Materialien.

Insbesondere großflächige Elemente lassen sich jedoch weder im Inneren von Werkstattwagen, noch auf Dachgepäckträgern transportieren. Dies trifft beispielsweise für den Transport von Glasscheiben, Möbelplatten und dergleichen zu.

Im Stand der Technik ist es bekannt, LKWs oder Transporter mit Rahmengestellen zu bestücken, die einen Transport großflächiger Elemente wie Glasscheiben, Möbelplatten und dergleichen in einer annähernd vertikalen Position zulassen.

Wollte man derartige Gestelle an Kombis, geschlossenen Kleintransportern, Kleinbussen oder sonstigen geschlossenen Werkstattwagen anordnen, so ergeben sich eine Reihe von Problemen. Ein Hauptproblem besteht in der Flexibilität der Einsatzmöglichkeiten des Fahrzeuges, da dieses zwangsläufig breiter wird. Ein weiteres Problem besteht in der mangelnden Möglichkeit der Reinigung des Fahrzeuges an dem Bereich, an dem eine vertikale Traggestellanordnung befestigt ist. Auch können sich Probleme hinsichtlich der Zugänglichkeit von Bereichen des Fahrzeuges ergeben, da seitlich angeordnete Traggestelle beispielsweise Radkästen überdecken und dergleichen. Um eine ausreichende Lastaufnahme sicher zu gewährleisten, sind die Traggestelle umfangreich am Kraftfahrzeug zu befestigen, so daß die Verwendung des Kfz ohne Traggestell einerseits oder die Verwendung eines Traggestells für mehrere Kfz umständlich ist.

Ausgehend von diesem Stand der Technik liegt der vorliegenden Erfindung die **Aufgabe** zugrunde, eine Vorrichtung für an einer Seite eines Kraftfahrzeuges im wesentlichen vertikal anzuordnende Traggestelle bereitzustellen, die eine einfache Montage und Demontage des Traggestells am Kraftfahrzeug gewährleistet, so daß die oben beschriebenen Nachteile behoben sind.

Zur technischen **Lösung** dieser Aufgabe wird mit der Erfindung vorgeschlagen, eine Vorrichtung für an einer Seite des Kraftfahrzeuges im wesentlichen vertikal anzuordnende Traggestelle mit jeweils einer Befestigungseinheit im Bereich einer Oberkante und einer Unterkante der Seite der Kraftfahrzeugkarosserie, wobei die wenigstens eine Befestigungseinheit an der Oberkante des Kraftfahrzeuges eine lösbare Schwenklagerverbindung umfaßt, und die wenigstens eine Befestigungseinheit an der Unterkante der Kraftfahrzeugkarosserie wenigstens eine im wesentlichen starre, kraftaufnehmende Verbindungseinheit umfaßt.

Durch die erfindungsgemäße Lösung wird ein Traggestell im wesentlichen vertikal an der Seite eines Kraftfahrzeuges, insbesondere eines wie oben beschriebenen Kraftfahrzeuges mit geschlossener Karosserie, vorzugsweise ein Kombi, ein Kleinbus, ein Kleintransporter oder dergleichen an wenigstens zwei Befestigungspunkten an der Karosserie befestigt. Dabei wird ein Befestigungspunkt im Bereich der Karosserieoberkante und ein Befestigungspunkt im Bereich der Karosserieunterkante verwendet. Der Oberkantenbereich kann beispielsweise die sogenannte Dachrinne eines Kraftfahrzeuges sein. Auch ist es möglich, bei Verwendung eines Dachgepäckträgers diesen als Befestigungsgegenlager zu verwenden. Schließlich ist es grundsätzlich möglich, die Karosserie im Dachbereich des Kraftfahrzeuges zu durchbohren und Befestigungsmittel dort einzusetzen. Im Bereich der Unterkante bedeutet vorzugsweise am Unterboden. Auch ist die untere seitliche Karosserie als Befestigungspunkt geeignet.

Durch die erfindungsgemäße Ausgestaltung wird im Bereich der Oberkante eine lösbare Schwenklagerbefestigung ausgebildet. Diese lösbare Schwenklagerbefestigung umfaßt wenigstens ein Element, welches im Oberkantenbereich der Kfz-Karosserie befestigt wird, und wenigstens ein Element, welches am Traggestell befestigt wird. Zwischen beiden ist dann das Schwenklager lösbar ausgebildet. Die Schwenkachse ist im wesentlichen parallel zu einer Kraftfahrzeuglängsachse angeordnet. Lösbar heißt, daß die das Schwenklager bildenden Elemente problemlos voneinander trennbar sind, beispielsweise durch Verschieben des Traggestells relativ zum Kraftfahrzeug parallel zu einer Längsachse, durch Ein-/Aushängen oder dergleichen. Die Schwenklagerausbildung umfaßt beispielsweise einen kraftfahrzeugseitig im wesentlichen parallel zu einer Kraftfahrzeuglängsachse angeordneten Zapfen und traggestellseitig eine Lagerhülse, die auf den Zapfen durch Längsverschiebung des Traggestells aufschiebbar ist. Bei der Anordnung an Kleinbussen, Kombis und dergleichen hat sich die Anordnung von vier derartigen Schwenklager-Befestigungseinheiten entlang des Oberkantenbereiches als ausreichend erwiesen.

Die Befestigung im Unterkantenbereich ist eine lösbare, im wesentlichen starre, kraftaufnehmende Verbindung. Dies bedeutet, daß die untere Befestigung in erster Linie der Kraftaufnahme und der starren Verbindung des Traggestells relativ zum Kraftfahrzeug dient. So kann beispielsweise am Unterboden des Kraftfahrzeuges ein Bolzenflansch angeordnet sein, beispielsweise in Form eines im wesentlichen rechteckigen Trägerelementes, welches zueinander fluchtende Bohrungen aufweist, die vorzugsweise parallel zu einer Längsachse des Kraftfahrzeuges liegen. Traggestellseitig ist ebenfalls ein Bolzenflansch ausgebildet, dessen Bohrung mit den kraftfahrzeugseitig angeordneten Bolzenflanschbohrungen fluchtend in Deckung zu bringen ist. Dann wird ein Tragbolzen eingesetzt. Diese Befestigung vermeidet weitere Relativbewegungen des Traggestells gegenüber dem Kraftfahrzeug und dient in erster Linie der Lastaufnahme.

Gemäß der beschriebenen Erfindung läßt sich das Traggestell leicht am Kraftfahrzeug montieren und demontieren. Es läßt sich durch Bildung der oberen Schwenklagerverbindung relativ zum Kraftfahrzeug einhängen und von diesem wegschwenken. Durch diese Möglichkeit wird die unter dem Traggestell liegende Kraftfahrzeugfläche leicht zugänglich, beispielsweise für die Durchführung von Reparaturen bis hin zum Reifenwechsel, Reinigungsarbeiten und dergleichen. Auch läßt sich das Traggestell in diesem Zustand leicht vom Kraftfahrzeug abnehmen, beispielsweise durch Aushängen, durch Lösen der Schwenklagerverbindung durch Längsverschiebung oder dergleichen. Es müssen praktisch keine sonstigen Befestigungsmittel gelöst werden.

Nachdem die oberen Schwenklagerverbindungen zwischen Kraftfahrzeug und Traggestell hergestellt wurden, kann das Traggestell in seiner Position fixiert werden, indem die unteren starren Verbindungen hergestellt werden. Beispielsweise haben sich bei herkömmlichen Kraftfahrzeuggrößen zwei untere starre Tragbefestigungen als ausreichend erwiesen. Das am Kraftfahrzeug schwenkbar angeordnete Traggestell wird im unteren Bereich durch Herstellen der starren Verbindungen am Kraftfahrzeug befestigt, so daß keine Relativbewegungen wie Längsverschieben, Schwenken oder dergleichen mehr möglich sind. Die unteren Befestigungen sind gemäß einem besonders vorteilhaften Vorschlag der Erfindung Schnellbefestigungen, also Steckbolzen oder dergleichen.

Das Traggestell ist gemäß einem vorteilhaften Vorschlag der Erfindung ein Glasscheibengestell, ein sogenanntes Reff. Ein derartige Gestell läßt sich in im wesentlichen vertikaler Position erfindungsgemäß einfach am Kraftfahrzeug anordnen und von diesem wieder abnehmen. Dadurch wird es möglich, das Kraftfahrzeug für unterschiedliche Zwecke einzusetzen, für unterschiedliche Lasten unterschiedliche Traggestelle zu verwenden oder vorhandene Traggestelle für mehrere Kraftfahrzeuge zu verwenden, da eine Umrüstung sehr schnell möglich ist. Die Erfindung bietet die Möglichkeit der Ausbildung von Traggestellsystemen für unterschiedlichste Zwecke.

Gemäß einem vorteilhaften Vorschlag der Erfindung umfaßt das Traggestell ein integriertes Leiterelement. Diese erfindungsgemäße Ausbildung ermöglicht es, problemlos bis zum Oberkantenbereich eines Kraftfahrzeuges aufzusteigen, wenn das Traggestell am Kraftfahrzeug befestigt ist. Dies ist insbesondere bei Kleintransportern, Kleinbussen und dergleichen zweckmäßig.

Gemäß einem weiteren vorteilhaften Vorschlag der Erfindung umfaßt das Traggestell Kraftfahrzeug-Elektroinstallationen für Beleuchtungselemente. So können beispielsweise Rückleuchten und dergleichen am Traggestell oder dessen Verkleidungselementen angeordnet sein. Für die Herstellung der elektrischen Verbindung ist das Kraftfahrzeug vorzugsweise mit einem Steckverbindungselement ausgerüstet.

Die erfindungsgemäße Ausgestaltung ist einfach und wirtschaftlich herstellbar und gewährleistet die einfache Montage und Demontage von Traggestellen an Kraftfahrzeugen, insbesondere an geschlossenen Kombis, Kleinbussen und dergleichen Werkstattfahrzeugen. Somit wird der Transport großflächiger Elemente, beispielsweise Glasscheiben, Bauplatten und dergleichen, problemlos möglich. Durch die einfache Demontage und Montagemöglichkeit sind schnelle Umrüstungen gewährleistet, so daß die Befestigungsanordnung für unterschiedliche Traggestelle, Traggestelle für unterschiedliche Fahrzeuge und die Fahrzeuge für unterschiedliche Zwecke ohne großen Aufwand herrichtbar sind.

Mit der Erfindung wird vorgeschlagen, daß zwischen Kraftfahrzeug und Traggestell ein Anschlag zur Vermeidung von Längsverschiebungen im Oberkantenbereich ausgebildet wird. Bei schweren Lasten können beispielsweise bei Bremsvorgängen Längsverschiebungen aufgrund der Massenträgheit auftreten. Um diese zu vermeiden sind Anschläge wünschenswert, die jedoch nicht die Montagemöglichkeit behindern sollen. Bei längsverschieblichen Montagemöglichkeiten im Schwenklagerbereich wird daher ein Anschlagelement vorgesehen, welches bei der vertikalen Position des Traggestells relativ zum Kraftfahrzeug wirksam ist, also in der Montageposition, während es bei ausgeschwenkter Position des Traggestells relativ zum Kraftfahrzeug unwirksam ist, so daß eine Längsverschiebung zur Montage und Demontage möglich ist. Ein derartiges Anschlagelement umfaßt beispielsweise ein kraftfahrzeugseitig angeordnetes U-Profil, in welches ein traggestellseitig angeordneter Anschlagnocken beim Einschwenken in die Montageposition eingeführt wird.

Weiterhin wird mit der Erfindung vorgeschlagen traggestellseitig eine C-Profil-Schiene anzuordnen, die die einfache Montage der traggestellseitigen Befestigungselemente für die Schwenklager-Einheiten darstellt. Die Befestigungselemente können leicht längsverschoben werden, so daß eine Montagejustierung problemlos ist.

Weitere Vorteile und Merkmale der Erfindung ergeben sich aus der folgenden Beschreibung anhand der Figuren. Dabei zeigen:
- Fig. 1: eine schematische Seitenansicht eines Ausführungsbeispiels der Erfindung;
- Fig. 2: eine schematische Rückansicht gemäß Fig. 1;
- Fig. 3: eine Darstellung eines Ausführungsbeispiels eines oberen Befestigungselementes in Draufsicht;
- Fig. 4: eine Ansicht des Elementes gemäß Fig. 3 in einer Seitenansicht;
- Fig. 5: eine Ansicht des Gegenelementes zu dem Element gemäß Fig. 3;
- Fig. 6: eine Ansicht des Elementes gemäß Fig. 5 in einer Draufsicht;
- Fig. 7: eine schematische Darstellung einer unteren Befestigungseinheit und
- Fig. 8: eine Darstellung eines Teils gemäß Fig. 7 in einer Seitenansicht.

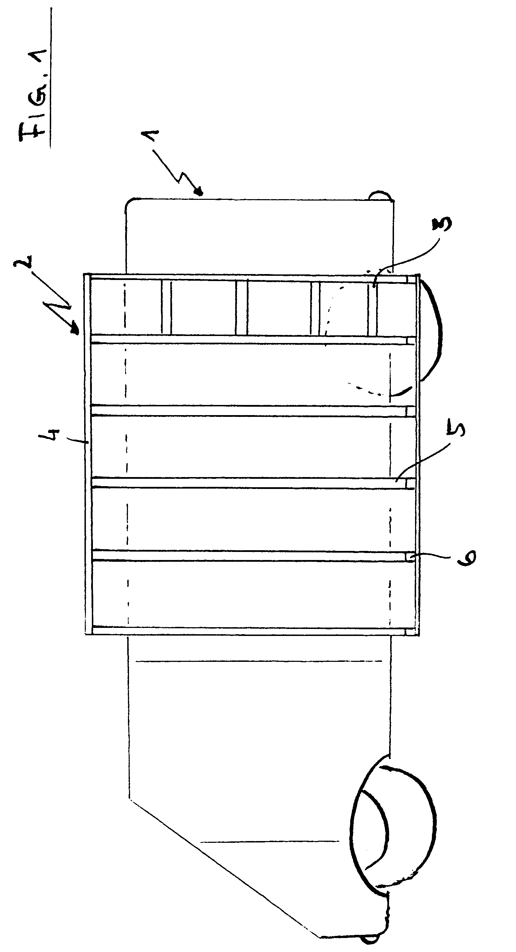

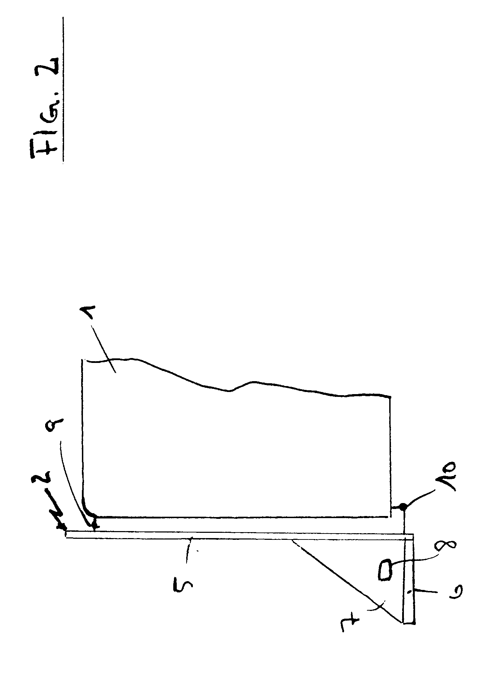

Gemäß Fig. 1 ist schematisch ein Fahrzeug 1, ein geschlossener Kleinbus, ein Kombi oder dergleichen gezeigt. Üblicherweise handelt es sich bei derartigen Fahrzeugen um Werkstattfahrzeuge, die für den mobilen Montage- und/oder Reparatureinsatz verwendet werden. An der Seite des Fahrzeugs ist ein Traggestell 2, im gezeigten Ausführungsbeispiel ein sogenanntes Reff gezeigt. Reffs sind Traggestelle für Glasscheiben, Fensterelemente und dergleichen. Das Reff ist, wie in den Fig. 1 und 2 gezeigt, an der Seite des Fahrzeugs 1 angeordnet und besteht in erster Linie aus Vierkantprofilen, wobei Rahmenprofile 4 durch im wesentlichen vertikale Verbindungsprofile 5 verbunden sind. Der untere Auflagerbereich ist durch Profilholme 6 gebildet.

Im gezeigten Ausführungsbeispiel ist das Reff 2 durch entsprechende Anordnung von Profilelementen mit einem Leiterelement 3 versehen. Darüber hinaus sind zumindest im unteren Bereich Verkleidungen 7 angeordnet, wobei an der hinteren Verkleidung 7 ein Beleuchtungselement 8 zur Ergänzung der Kfz-Beleuchtung angeordnet ist.

Das Reff 2 ist am Fahrzeug 1 mittels oberer Befestigungseinheiten 9 und unterer Befestigungseinheiten 10 verbunden. Im Oberbereich können über die Reff-Länge 4 Befestigungseinheiten 9, im unteren Bereich beispielsweise zwei Befestigungseinheiten 10 verwendet werden.

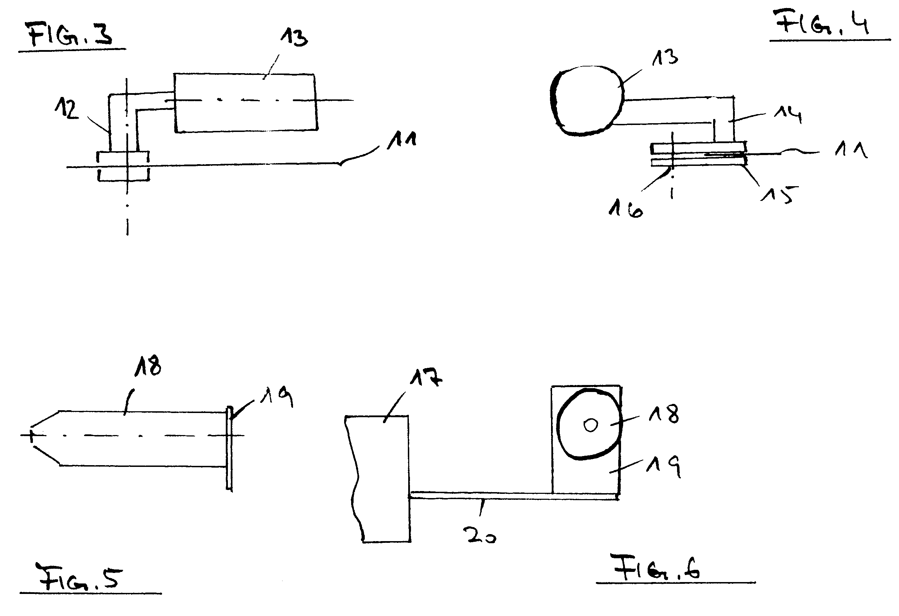

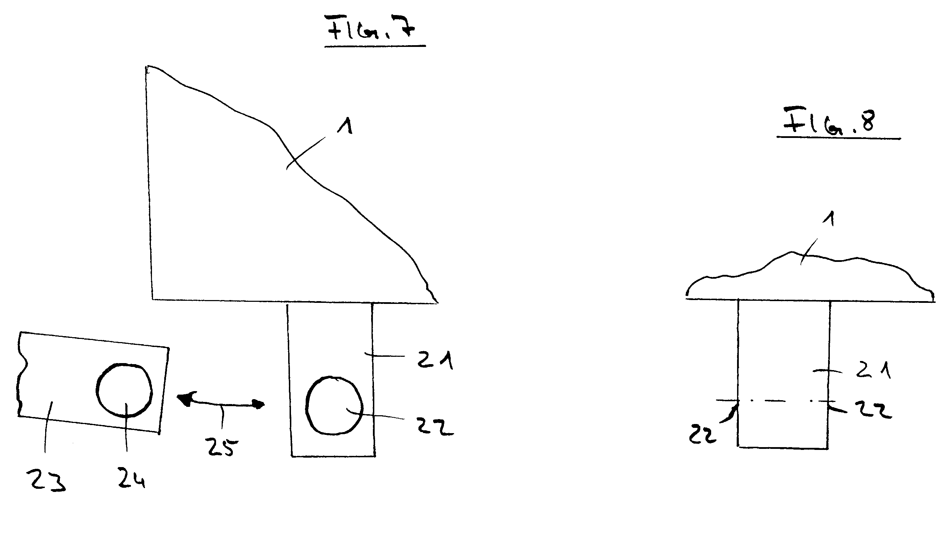

Fig. 3 bis 6 zeigen ein Ausführungsbeispiel für eine obere Befestigungseinheit 9. Diese besteht kfzseitig aus einem Befestigungselement 12, welches an der Dachrinne 11 des Fahrzeugs befestigt wird. Zu diesem Zweck sind zwei Flansche 15 ausgebildet, die mittels einer nicht gezeigten Schraube 16 miteinander verschraubt werden und so die Dachrinne 11 zwischen sich einklemmen. Am oberen Flansch ist ein Tragprofil 14 angeordnet, welches seinerseits eine Scharnierhülse 13 trägt.

Traggestellseitig ist ein wie in Fig. 5 und 6 gezeigter Scharnierzapfen befestigt. Die aus Tragprofil 19, 20 bestehende Trageinheit ist an einem der Rahmenelemente 17 des Traggestells befestigt, beispielsweise durch Verschweißen, oder auch durch Verschrauben in einem am Traggestell angeordneten - nicht gezeigten - C-Schienen-Profil. Bei einem derartigen Profil handelt es sich um ein Profil mit einem im wesentlichen C-förmigen Querschnitt. Dieses bietet die Möglichkeit, einen inneren Flansch und einen äußeren Flansch im C-Profil längs zu verschieben und an der gewünschten Stelle zu verschrauben. Der äußere Flansch trägt dann den Scharnierzapfen 18.

Zur Herstellung der oberen Verbindung wird das Traggestell neben dem Kraftfahrzeug positioniert und durch Längsverschieben der Tragzapfen 18 in eine Scharnierhülse 13 eingeschoben. Diese Verbindung erfolgt gleichzeitig an mehreren Stellen im Oberkantenbereich, so daß das Traggestell praktisch am Kraftfahrzeug eingehängt ist.

In den Fig. 7 und 8 ist eine untere Befestigung gezeigt. Schematisch ist die Unterseite des Kraftfahrzeuges 1 gezeigt, an welcher ein Bolzenflansch 21 angeordnet ist, der eine Bohrung 22 aufweist. Gemäß Fig. 8 handelt es sich um ein Kastenprofil, welches zwei Bohrungen 22 aufweist. Traggestellseitig ist ein Bolzenflansch 23 befestigt, beispielsweise durch Schweißen oder ebenfalls durch Verschrauben in einem Profil, welcher seinerseits die Bohrung 24 aufweist. Durch Verschwenken des Traggestells relativ zum Kraftfahrzeug 1 gemäß Pfeil 25 in Fig. 7 wird der traggestellseitige Bolzenflansch 23 mit dem kraftfahrzeugseitigen Bolzenflansch 21 in Deckung gebracht, so daß die Bohrungen 22 und 24 fluchten. Hier können dann einfach und schnell Steckbolzenverbindungen oder ähnliche Schnellverbindungen das Traggestell am Kraftfahrzeug fixieren, derart, daß zugleich auch Lasten an dieser Stelle aufgenommen werden. Nicht gezeigt sind entsprechende elektrische Anschlüsse, die möglicherweise durch einfache Steckverbindungen herstellbar sind.

Die gezeigten und beschriebenen Beispiele dienen nur der Erläuterung und sind nicht beschränkt.

### Bezugszeichenliste

- 1: Kraftfahrzeug
- 2: Traggestell
- 3: Leiterelement
- 4: Rahmenprofil
- 5: Vertikalprofil
- 6: Tragholm
- 7: Seitenverkleidung
- 8: Beleuchtungselement
- 9: Obere Befestigungseinheit
- 10: Untere Befestigungseinheit
- 11: Dachrinne
- 12: Befestigungselement
- 13: Scharnierhülse
- 14: Tragprofil
- 15: Befestigungsflansch
- 16: Verschraubungsstelle
- 17: Traggestellelement
- 18: Scharnierbolzen
- 19: Tragprofil
- 20: Tragprofil
- 21: Bolzenflansch
- 22: Bohrung
- 23: Bolzenflansch
- 24: Bohrung
- 25: Bewegungspfeil

## Patentansprüche

1. Vorrichtung für an einer Seite eines Kraftfahrzeuges im wesentlichen vertikal anzuordnende Traggestelle mit jeweils einer Befestigungseinheit im Bereich einer Oberkante und einer Unterkante der Seite der Kraftfahrzeugkarosserie, wobei die wenigstens eine Befestigungseinheit an der Oberkante des Kraftfahrzeuges eine lösbare Schwenklagerverbindung umfaßt, und die wenigstens eine Befestigungseinheit an der Unterkante der Kraftfahrzeugkarosserie wenigstens eine lösbare im wesentlichen starre, kraftaufnehmende Verbindungseinheit umfaßt.

2. Vorrichtung nach Anspruch 1, wobei die wenigstens eine Befestigungseinheit an der Oberkante jeweils wenigstens ein am Kraftfahrzeug und ein am Traggestell zu befestigendes Element umfaßt, die beide voneinander lösbar in einer Eingriffsposition relativ zueinander um eine im wesentlichen parallel zu einer Kraftfahrzeuglängsachse liegende Achse verschwenkbar und zur Schwenkachse quer verlaufende Kräfte aufnehmend verbindbar sind, und wobei die wenigstens eine Befestigungseinheit an der Unterkante jeweils wenigstens ein am Kraftfahrzeug und ein am Traggestell zu befestigendes Element umfaßt, die im wesentlichen starr, kraftaufnehmend und lösbar miteinander verbindbar sind.

3. Vorrichtung nach einem der vorhergehenden Ansprüche, dadurch gekennzeichnet, daß die Befestigungseinheit für den Oberkantenbereich scharnierartig ausgebildet ist.

4. Vorrichtung nach Anspruch 3, dadurch gekennzeichnet, daß die Befestigungseinheit im Oberkantenbereich eine relative Längsverschiebung zwischen Traggestell und Kraftfahrzeug zuläßt.

5. Vorrichtung nach einem der Ansprüche 3 oder 4, dadurch gekennzeichnet, daß diese ein Anschlagelement zur Begrenzung der Längsverschiebbarkeit zwischen Traggestell und Kraftfahrzeug in der Montageposition umfaßt.

6. Vorrichtung nach einem der vorhergehenden Ansprüche, dadurch gekennzeichnet, daß die Befestigungseinheit im Oberkantenbereich kraftfahrzeugseitig ein Scharnier-Hülsenelement aufweist, in welches ein traggestellseitig angeordneter Scharnierstift einsetzbar ist.

7. Vorrichtung nach einem der vorhergehenden Ansprüche, dadurch gekennzeichnet, daß traggestellseitig wenigstens für die Befestigungselemente im Oberkantenbereich C-Profil-Schienenelemente angeordnet sind.

8. Vorrichtung nach einem der vorhergehenden Ansprüche, dadurch gekennzeichnet daß die Befestigungseinheit im Unterkantenbereich sowohl kraftfahrzeugseitig als auch traggestellseitig zu befestigende Bolzenflansche umfaßt, die durch einzusetzende Bolzen verbindbar sind.

9. Vorrichtung nach Anspruch 8, dadurch gekennzeichnet daß die Verbindungsbolzen Steckbolzen sind.

10. Vorrichtung nach einem der vorhergehenden Ansprüche, dadurch gekennzeichnet, daß das Traggestell ein Glasscheibengestell (Reff) ist.

11. Vorrichtung nach einem der vorhergehenden Ansprüche, dadurch gekennzeichnet, daß das Traggestell ein Leiterelement aufweist.

12. Vorrichtung nach einem der vorhergehenden Ansprüche, dadurch gekennzeichnet, daß am Traggestell Kraftfahrzeug-Beleuchtungselemente angeordnet sind.
